# EUROPEAN PATENT APPLICATION

(11) **EP 3 202 471 A1**
(43) Date of publication of application: **09.08.2017**
(21) Application number: 15847860.2
(22) Date of filing: 30.09.2015
(51) Int. Cl.: A63F 13/55, A63F 13/332

(54) **METHOD, APPARATUS, AND APPLICATION FOR PROVIDING USER INTERFACE FOR GAME**

(30) Priority: 30.09.2014 KR 20140130703
(71) Applicant: XQ Games Co., Ltd., Seoul 06237 (KR)
(72) Inventor: KIM, Han Ju, Seoul 04131 (KR); YOON, Hyo Byeong, Incheon 21017 (KR); KIM, Ji Ho, Gwanak-gu Seoul 08725 (KR)
(74) Representative: V.O.
(86) International application number: PCT/KR2015/010336
(87) International publication number: WO 2016/053012

(57) **Abstract**

Disclosed is a method for providing a user interface for a game. An embodiment comprises the steps of: defining a game progress panel user interface area for displaying visual information on a game progress at one side of a display of a user terminal; defining a card panel user interface area for displaying, at the other side of the display, a card information matrix configured on the basis of card information included in an account of a game player; displaying a game character corresponding to the card information in the game progress panel user interface area on the basis of an input of the card information included in the card information matrix; and displaying the card information in an area defined around the game character.

## Description

### Technical Field

The present invention relates to method, apparatus, and application for providing a user interface for a game

### Background Art

Propagations of user terminals such as a smartphone and a tablet personal computer (PC) allow users of the user terminals to play a mobile game with other users over a wireless network. Also, a development of an application market allows the users to download game applications in order to play the mobile game.

As a popularity of the mobile game increases, a type of game application may be more diversified. There are various types of mobile games, for example, a sport game, a card game, a race game, and a puzzle game. Among the mobile games, the card game such as a Go-stop game, a poker game, and the like simply using a card has been popular. Recently, with increases in performances of the user terminals, a popularity of a card role-playing game (RPG) is increasing.

Korean Patent Laid-Open Publication No. 10-2013-0083009 filed on December 27, 2011 and published on July 22, 2013 is entitled "Apparatus and method of providing trade card game using information of online game character". The publication discloses a configuration of generating different cards based on an appearance image, a level, and equipment of an online game player character and providing a trade card game using the cards.

### Disclosure of Invention

### Technical Goals

An aspect provides a method, an apparatus, and an application to allow a game player to acquire a plurality of cards in a game and play a battle game in which a game character fights another character such that the game player experiences a pleasure.

Another aspect provides a method, an apparatus, and an application to provide a user interface suitable for a game so as to allow a game player to easily play the game and attract the game player to steadily play the game.

### Technical solutions

According to an aspect, there is provided a method of providing a user interface for a game, the method including defining a game process panel user interface area for displaying visual information about a game process on a portion of a display, defining a card panel user interface area for displaying a card information matrix that is configured based on card information included in an account of a game player, on another portion of the display, displaying, based on an input of the card information in the card information matrix, a game character corresponding to the card information on the game process panel user interface area, and displaying the card information on an area defined around the game character.

The card information may include attribute information and number information of a card acquired in the game.

The method may further include displaying the number information and a color corresponding to the attribute information on the card panel user interface area.

The attribute information may indicate an attribute stronger or weaker than one of a plurality of pieces of attribute information classified based on a predefined attribute relationship.

The number information may indicate a skill of the game character.

The method may further include displaying at least one counterpart character fighting with the game character on the game process panel user interface area and displaying attribute information and number information of the counterpart character.

The method may further include displaying detailed information of the counterpart character on the game process panel user interface area based on an input of the game player with respect to the counterpart character.

The method may further include controlling a graphical property of the game process panel user interface area based on an input of the game player with respect to the game process panel user interface area.

The method may further include displaying bonus card information on the display when a preset reference is satisfied for the game process.

According to another aspect, there is also provided an apparatus for providing a user interface for a game, the apparatus including a processor configured to execute a game stored in a memory and a display, wherein the processor is configured to display, based on an input of card information in a card information matrix displayed on a card panel user interface area, a game character corresponding to the card information on a game process panel user interface area, and control the display to display the card information on an area defined around the game character, wherein the game process panel user interface area is an area defined to display visual information about a process of the game on a portion of the display, and wherein the card panel user interface area is an area defined to display the card information matrix configured based on the card information included in an account of the game player on another portion of the display.

The card information may include attribute information and number information of a card acquired in the game.

The display may be configured to display the number information and a color corresponding to the attribute information on the card panel user interface area.

The attribute information may indicate an attribute stronger or weaker than one of a plurality of pieces of attribute information classified based on a predefined attribute relationship.

The number information may indicate a skill of the game character.

The display may be configured to display at least one counterpart character fighting with the game character on the game process panel user interface area and display attribute information and number information of the counterpart character.

The display may be configured to display detailed information of the counterpart character on the game process panel user interface area based on an input of the game player with respect to the counterpart character.

The processor may be configured to control a graphical property of the game process panel user interface area based on an input of the game player with respect to the game process panel user interface area.

The display may be configured to display bonus card information on the display when a preset reference is satisfied for the game process.

According to still another aspect, there is also provided an application for providing a user interface for a game, the application being stored in a memory and executed by a processor, wherein the application is executed to define a game process panel user interface area for displaying visual information about a game process on a portion of a display, define a card panel user interface area for displaying a card information matrix that is configured based on card information included in an account of a game player, on another portion of the display, display, based on an input of the card information in the card information matrix, a game character corresponding to the card information on the game process panel user interface area, and display the card information on an area defined around the game character.

The card information may include attribute information and number information of a card acquired in the game.

The application may be executed to display the number information and a color corresponding to the attribute information on the card panel user interface area.

The attribute information may indicate an attribute stronger or weaker than one of a plurality of pieces of attribute information classified based on a predefined attribute relationship.

The number information may indicate a skill of the game character.

The application may be executed to display at least one counterpart character fighting with the game character on the game process panel user interface area and display attribute information and number information of the counterpart character.

The application may be executed to display detailed information of the counterpart character on the game process panel user interface area based on an input of the game player with respect to the counterpart character.

The application may be executed to control a graphical property of the game process panel user interface area based on an input of the game player with respect to the game process panel user interface area.

The application may be executed to display bonus card information on the display when a preset reference is satisfied for the game process.

### Effects

According to an aspect, it is possible to allow a game player to acquire a plurality of cards in a game and play a battle game in which a game character fights another character such that the game player experiences a pleasure.

According to another aspect, it is possible to provide a user interface suitable for a game so as to allow a game player to easily play the game and attract the game player to steadily play the game.

### Brief Description of Drawings

FIG. 1 is a flowchart illustrating a method of providing a user interface for a game according to an example embodiment.
FIGS. 2 and 3 are diagrams illustrating examples of an application for providing a user interface for a game according to an example embodiment.
FIG. 4 is a block diagram illustrating an apparatus for providing a user interface for a game according to an example embodiment.

### Best Mode for Carrying Out the Invention

Hereinafter, example embodiments will be described in detail with reference to the accompanying drawings.

It should be understood, however, that there is no intent to limit this disclosure to the particular example embodiments disclosed. On the contrary, example embodiments are to cover all modifications, equivalents, and alternatives falling within the scope of the example embodiments.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Regarding the reference numerals assigned to the elements in the drawings, it should be noted that the same elements will be designated by the same reference numerals, wherever possible, even though they are shown in different drawings. Also, in the description of embodiments, detailed description of well-known related structures or functions will be omitted when it is deemed that such description will cause ambiguous interpretation of the present disclosure.

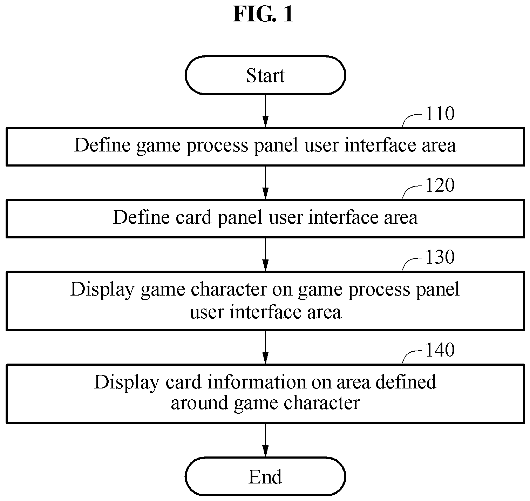

FIG. 1 is a flowchart illustrating a method of providing a user interface for a game according to an example embodiment.

A method of providing a user interface for a game may be performed by a user interface (UI) providing apparatus.

In operation 110, the UI providing apparatus may define a game process panel user interface area on a portion of a display. Here, the game process panel user interface area may be an area in which visual information on a game process is represented.

The visual information on the game process may include visual information on a game character and a counterpart character fighting with the game character as further discussed later. The visual information may also include power information of the game character and the counterpart character. The power information may be represented upward the game process panel user interface area. The power information may be changed in response to an attack, a defense, or a treatment of the game character and the counterpart character.

In operation 120, the UI providing apparatus may define a card panel user interface area on another portion of the display. Here, the card panel user interface area may be an area in which a card information matrix configured based on card information included in a game player is represented.

The game player may acquire a plurality of cards, for example, 36 cards through a game. That is, the game player may acquire card information through the game, and the card information may be stored in a database corresponding to an account of the game player. For example, the game player may acquire 36 pieces of card information.

The card information may include number information and attribute information of a card. The attribute information may indicate an attribute stronger or weaker than one of a plurality of pieces of attribute information classified based on a predefined attribute relationship. The attribute information may include, for example, a water attribute, a fire attribute, a tree attribute, and a soil attribute. In this example, the water attribute may be robust to the fire attribute and the fire attribute may be robust to the tree attribute. Also, the tree attribute may be robust to the soil attribute and the soil attribute may be robust to the water attribute. In other words, the fire attribute may be vulnerable to the water attribute and the tree attribute may be vulnerable to the fire attribute. Also, the soil attribute may be vulnerable to the tree attribute and the water attribute may be vulnerable to the soil attribute.

Also, the attribute information may be information corresponding to a career of the game character. For example, a game character having the water attribute may be a magician and a game character having the fire attribute may be a warrior. Also, a game character having the tree attribute may be an archer and a game character having the soil attribute may be a ninja. In this example, the magician and the archer may belong to a long-range attack type and the warrior and the ninja may belong to a short-range attack type.

As described above, the game character having the water attribute may have an attribute stronger than that of the game character having the fire attribute. When the game character having the water attribute fights with the game character having the fire attribute, an offense power of the game character having the water attribute may increase.

The plurality of pieces of attribute information may be displayed to be distinguished from one another. Each of the pieces of attribute information may correspond to a predetermined color. For example, the water attribute may correspond to a blue color and the fire attribute may correspond to a red color. Also, the tree attribute may correspond to a green color and the soil attribute may correspond to a yellow color. The UI providing apparatus may display a color corresponding to attribute information such that the game player recognizes an attribute of card information through the color.

The number information of the card may include numbers 1 through 9. The number information may represent a skill of the game character. For example, the numbers 1 through 3 may represent offensive skills, the numbers 4 through 6 may represent heal skills, and the number 7 through 9 may represent defensive skills.

In one example, the numbers 1 through 9 may correspond to skills of the game character. The number 1 may correspond to a critical attack and the number 2 may correspond to a skill for attacking a leader of counterpart characters. The number 3 may correspond to a skill for attacking remaining counterpart characters other than the leader among a plurality of counterpart characters displayed on a screen. The number 4 may correspond to a skill for attacking a counterpart character having the same attribute as the game character. The number 5 may correspond to a skill for attacking the leader among the counterpart characters and may receive a bonus offensive power when attacking the leader having the same attribute information as the attribute information of the game character. The number 6 may correspond to a skill for attacking attribute information different from the attribute information of the game character. The number 7 may correspond to a skill for attacking a counterpart character having number information of the number 2 or 5. The number 8 may correspond to a skill for healing a vitality of a leader character among game characters of a user and the number 9 may correspond to a skill for healing vitalities of the remaining game characters other than the leader character.

The card or the card information acquired by the game player may include one of the water attribute, the fire attribute, the tree attribute, and the soil attribute, and the number information of one of the numbers 1 through 9.

The game player may configure the card information matrix using the acquired card information. That is, the game player may configure a card deck in a form of matrix based on the acquired card information. The card information matrix may include the card information acquired by the game player. The game player may perform a battle in the game using the card deck or the card information matrix. Hereinafter, the term "card deck" may be interchangeably used with the term "card information matrix".

When the battle occurs, the game player may select the predetermined number of pieces of card information from the card deck. For example, the game player may select four pieces of card information from the card deck. When the card information is selected, a game character corresponding to the card information may be summoned.

In operation 130, based on an input of the card information included in the card deck, the UI providing apparatus may display the game character corresponding to the card information on the game process panel user interface area.

In operation 140, the UI providing apparatus may display the card information on an area defined around the game character. For example, the UI providing apparatus may display the card information above a head of the game character. The UI providing apparatus may display the attribute information on an area defined around the game character. In this example, the color corresponding to the attribute information may also be displayed such that the attribute information of the game character is identified. The UI providing apparatus may display the number information on an area defined around the game character. When the number information is displayed, whether the skill of the game character is the offensive skill may be identified.

The UI providing apparatus may display skill information and the attribute information such that the skill information and the attribute information are identified.

The UI providing apparatus may display the number information and the color corresponding to the attribute information of the card information on the card panel user interface area. The game player may select the game character to be summoned based on the color and the number information.

The UI providing apparatus may display at least one counterpart character fighting with the game character on the game process panel user interface area. Also, the UI providing apparatus may display number information and attribute information of the counterpart character. The UI providing apparatus may display the number information and the attribute information on an area defined around the counterpart character. For example, the UI providing apparatus may display the number information and the attribute information above a head of the counterpart character. In this example, in response to an input associated with the counterpart character, the UI providing apparatus may sense the input and display detailed information of the counterpart character on the game process panel user interface area. The detailed information of the counterpart character may include a description about the attribute information of the counterpart character or a description about a skill of the counterpart character.

The UI providing apparatus may control a graphical property of the game process panel user interface area based on an input of the game player with respect to the game process panel user interface area. In response to a manipulation of the game player, a function corresponding to the manipulation may be executed. When the function is executed, the UI providing apparatus may change the graphical property of the game process panel user interface area.

For example, when the game player taps and holds on a portion corresponding to a predetermined location of a game screen for a predetermined period of time, the game character may run to the predetermined location. In this example, the UI providing apparatus may change the graphical property of the game character such that the stationary game character runs.

In another example, it is assumed that the game character possesses a sword and faces the counterpart character. The game player may apply a manipulation for fighting with the counterpart character such that a function corresponding to the manipulation is executed. In this example, the UI providing apparatus may change the graphical property of the game character such that the game character brandishes the sword.

When a preset reference is satisfied for the game process, the UI providing apparatus may display bonus card information on the display. The bonus card information may additionally assign a new ability to a leader character and help in combining numbers and attributes of a marble. A display of a terminal may display a leader character selected by a user and a game character corresponding to card character selected from the card deck. For example, the display of the terminal may display five game characters including one leader character. The leader character may be a game character set by the user. The leader character may be displayed to be distinguished from other game characters.

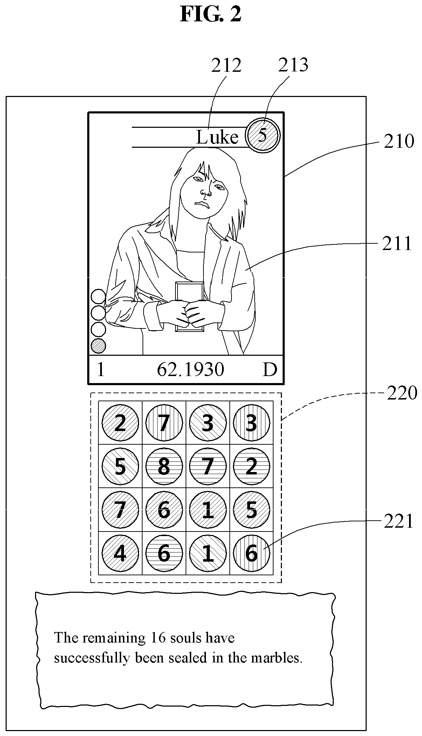

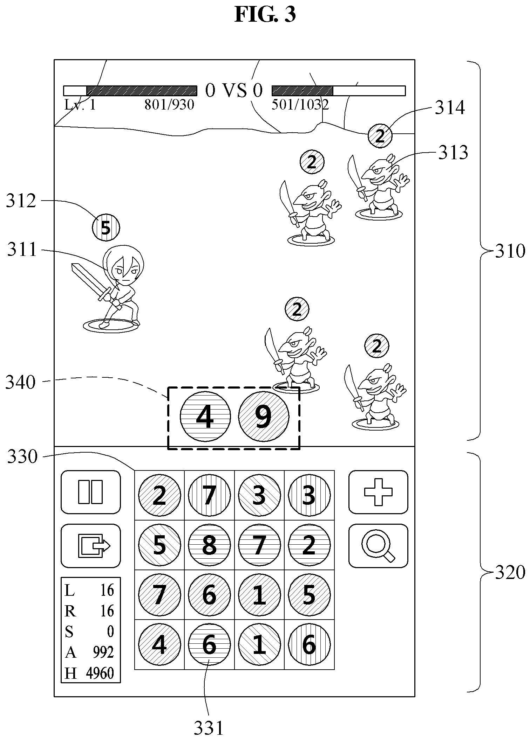

FIGS. 2 and 3 are diagrams illustrating examples of an application for providing a user interface for a game according to an example embodiment.

An application for providing a user interface, hereinafter, referred to as a UI providing application, may be stored in a memory and executed by a processor.

Referring to FIG. 2, the UI providing application may display a card 210 that is acquired by a game player in a game. The card 210 may include a game character 211, identification (ID) information 212 of a game character, and card information 213. The card information 213 may include number information and attribute information of the game character.

Also, the UI providing application may display a card deck 220 that is configured by the game player based on card information. The card deck 220 may be in a form of matrix. The card deck 220 may include a plurality of items of card information. In the card deck 220, the card 210 acquired by the game player may be represented as an element 221 of the matrix. For example, the card 210 acquired by the game player may be represented as marble-shaped card information in the card deck 220. Also, the card information 213 may be represented on an element of the card deck 220 in the card 210 acquired by the game player. That is, card information represented in the card deck 220 may correspond to the card 210 acquired by the game player in the game.

In FIG. 2, the marble-shaped card information may be displayed with various directional stripes in the card deck 220. Specifically, the card deck 220 may include card information indicated by vertical stripes and horizontal stripes. Also, the card deck 220 may include card information indicated by right-top-to-left-bottom diagonal stripes and left-top-to-right-bottom diagonal stripes. A direction of the stripes on the card information may represent attribute information of the card information. For example, the vertical stripe may represent a water attribute and the horizontal stripe may represent a fire attribute. Also, the right-top-to-left-bottom diagonal stripe may represent a tree attribute and the left-top-to-right-bottom diagonal stripe may represent a soil attribute.

In addition to the example of FIG. 2, the attribute information of the card information may also be displayed to be distinguished by colors. For example, the water attribute may be displayed by a blue color and the fire attribute may be displayed by a red color. Also, the tree attribute may be displayed by a green color and the soil attribute may be displayed by a yellow color.

The attribute information being distinguished by directions or colors is merely an example and thus, not to be taken as being limited to the example.

Referring to FIG. 3, the UI providing application may define a game process panel user interface area 310. Here, the game process panel user interface area 310 may be an area defined to display visual information on a game process on a portion of a display. The UI providing application may display information on power of a game character 311 and a counterpart character 313 fighting with the game character 311 on an upper portion of the game process panel user interface area 310.

The UI providing application may define a card panel user interface area 320. The card panel user interface area 320 may be an area defined to display a card deck 330 that is configured based on card information included in an account of the game player on another portion of the display. That is, the card deck 330 may be represented in the card panel user interface area 320.

The UI providing application may sense an input of the game player with respect to card information included in the card deck 330. For example, the game player may touch card information 331 included in the card deck 330 and the UI providing application may sense the touch corresponding to the card information 331. The UI providing application may display the game character 311 corresponding to card information selected by the game player. In this example, the UI providing application may display the game character 311 on the card panel user interface area 310.

The UI providing application may display card information 312 that is selected by the game player, on an area defined around the game character 311. As described above, the card information 312 may include attribute information and number information. The attribute information may indicate an attribute stronger or weaker than one of a plurality of items of attribute information classified based on a predefined attribute relationship. In the example of FIG. 3, the attribute information of the card information 312 may be a water attribute. The water attribute may be stronger than a fire attribute and weaker than a soil attribute. When the game character 311 having the water attribute fights with a counterpart character having the fire attribute, the game character 311 may acquire a bonus offense power or, for example, an offense power of the game character 311 may by increased by a predetermined proportion.

The UI providing application may display number information of card information on an area defined around the game character 311. The number information may indicate a skill of the game character 311. For example, numbers 1 through 3 may indicate offensive skills, numbers 4 through 6 may indicate heal skills, and numbers 7 through 9 may indicate defensive skills. In another example, as described above, the numbers 1 through 9 may correspond to skills to be used by the game character.

In FIG. 3, the number "5" may be displayed above a head of the game character 311 and a leader of counterpart characters may be attacked. Also, when the game character 311 attacks a leader having the same attribute information as the game character 311, a bonus offense power may be rewarded.

The UI providing application may display the number information of the card information and the color corresponding to the attribute information of the card information on the card panel user interface area 320. The game player may select a game player to be summoned based on the color and the number information.

The UI providing application may display at least one counterpart character 313 and attribute information and number information 314 of the counterpart character 313 on the game process panel user interface area 310. Based on the attribute information of the counterpart character 313, the game player may summon a game character having attribute information stronger than the counterpart character 313. Also, the game player may summon a game character having a skill to compete with a skill of the counterpart character 313 based on the number information of the counterpart character 313.

The UI providing application may display detailed information of the counterpart character 313 on the game process panel user interface area 310 based on an input of the game player with respect to the counterpart character 313. The detailed information of the counterpart character 313 may include a description about the attribute information of the counterpart character 313 and a description about a skill of the counterpart character 313.

The UI providing application may control a graphical property of the game process panel user interface area 310 based on an input of the game player with respect to the game process panel user interface area 310. For example, in response to an input of the game player with respect to the game character 311, the game character may perform a motion corresponding to the input. The UI providing application may change the graphical property of the game character 311 to display the motion performed by the game character 311.

When a preset reference is satisfied for the game process, the UI providing apparatus may display bonus card information 340 on the display.

Since the descriptions of FIGS. 1 and 2 are also applicable to FIG. 3, repeated description will be omitted.

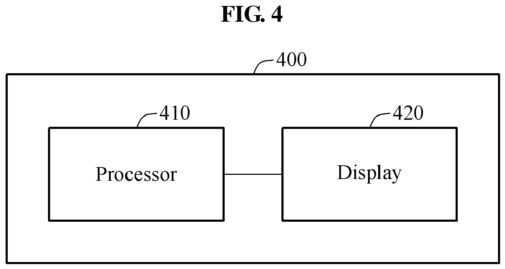

FIG. 4 is a block diagram illustrating an apparatus for providing a user interface for a game according to an example embodiment.

Referring to FIG. 4, an apparatus 400 for providing a user interface for a game, hereinafter, referred to as a UI providing apparatus 400, may include a processor 410 and a display 420.

The processor 410 may execute a game stored in a memory. The processor 410 may control the display 420 such that a result of execution based on instructions is displayed on the display 420.

Specifically, based on an input of card information included in a card information matrix displayed on a card panel user interface area, the processor 410 may control the display 420 to display a game character corresponding to the card information on a game process panel user interface area. Here, the game process panel user interface area may be an area defined to display visual information on a game process on a portion of a display. Also, the card panel user interface area may be an area defined to display the card information matrix configured based on card information included in an account of the game player on another portion of the display.

The processor 410 may control the display 420 to display the card information on an area defined around the game character. The card information may include number information and attribute information of a card acquired in the game. The card acquired in the game may include the game character and the attribute information of the card may indicate attribute information of the game character. Also, the number information of the card may indicate a skill of the game character.

The attribute information may indicate an attribute stronger than or weaker than one of a plurality of items of attribute information classified based on a predefined attribute relationship. The foregoing description about the attribute information is also applicable here, repeated information will be omitted.

The display 420 may display the number information of the card information and the color corresponding to the attribute information of the card information on the card panel user interface area. The game player may select a game character to be summoned from a card deck based on the color and the number information.

The display 420 may display at least one counterpart character fighting with the game character on the game process panel user interface area. The display 420 may also display number information and attribute information of the counterpart character.

The display 420 may display detailed information of the counterpart character on the game process panel user interface area based on an input of the game player with respect to the counterpart character.

The processor 410 may control a graphical property of the game process panel user interface area based on an input of the game player with respect to the game process panel user interface area.

When a preset reference is satisfied for the game process, the display 420 may display bonus card information.

Since the descriptions of FIGS. 1 through 3 are also applicable to FIG. 4, repeated description will be omitted.

The units described herein may be implemented using hardware components and software components. For example, the hardware components may include microphones, amplifiers, band-pass filters, audio to digital convertors, and processing devices. A processing device may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such a parallel processors.

The software may include a computer program, a piece of code, an instruction, or some combination thereof, for independently or collectively instructing or configuring the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. In particular, the software and data may be stored by one or more computer readable recording mediums.

The methods according to the above-described embodiments may be recorded, stored, or fixed in one or more non-transitory computer-readable media that includes program instructions to be implemented by a computer to cause a processor to execute or perform the program instructions. The media may also include, alone or in combination with the program instructions, data files, data structures, and the like. The program instructions recorded on the media may be those specially designed and constructed, or they may be of the kind well-known and available to those having skill in the computer software arts. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations and methods described above, or vice versa.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

## Claims

1. A method of providing a user interface for a game, the method comprising:
defining a game process panel user interface area for displaying visual information about a game process on a portion of a display;
defining a card panel user interface area for displaying a card information matrix that is configured based on card information included in an account of a game player, on another portion of the display;
displaying, based on an input of the card information in the card information matrix, a game character corresponding to the card information on the game process panel user interface area; and
displaying the card information on an area defined around the game character.

2. The method of claim 1, wherein the card information includes attribute information and number information of a card acquired in the game.

3. The method of claim 2, further comprising:
displaying the number information and a color corresponding to the attribute information on the card panel user interface area.

4. The method of claim 2, wherein the attribute information indicates an attribute stronger or weaker than one of a plurality of pieces of attribute information classified based on a predefined attribute relationship.

5. The method of claim 2, wherein the number information indicates a skill of the game character.

6. The method of claim 1, further comprising:
displaying at least one counterpart character fighting with the game character on the game process panel user interface area and displaying attribute information and number information of the counterpart character.

7. The method of claim 6, further comprising:
displaying detailed information of the counterpart character on the game process panel user interface area based on an input of the game player with respect to the counterpart character.

8. The method of claim 1, further comprising:
controlling a graphical property of the game process panel user interface area based on an input of the game player with respect to the game process panel user interface area.

9. The method of claim 1, further comprising:
displaying bonus card information on the display when a preset reference is satisfied for the game process.

10. An apparatus for providing a user interface for a game, the apparatus comprising:
a processor configured to execute a game stored in a memory; and
a display,
wherein the processor is configured to display, based on an input of card information in a card information matrix displayed on a card panel user interface area, a game character corresponding to the card information on a game process panel user interface area, and control the display to display the card information on an area defined around the game character,
wherein the game process panel user interface area is an area defined to display visual information about a process of the game on a portion of the display, and
wherein the card panel user interface area is an area defined to display the card information matrix configured based on the card information included in an account of the game player on another portion of the display.

11. The apparatus of claim 10, wherein the card information includes attribute information and number information of a card acquired in the game.

12. The apparatus of claim 11, wherein the display is configured to display the number information and a color corresponding to the attribute information on the card panel user interface area.

13. The apparatus of claim 11, wherein the attribute information indicates an attribute stronger or weaker than one of a plurality of pieces of attribute information classified based on a predefined attribute relationship.

14. The apparatus of claim 11, wherein the number information indicates a skill of the game character.

15. The apparatus of claim 10, wherein the display is configured to display at least one counterpart character fighting with the game character on the game process panel user interface area and display attribute information and number information of the counterpart character.

16. The apparatus of claim 15, wherein the display is configured to display detailed information of the counterpart character on the game process panel user interface area based on an input of the game player with respect to the counterpart character.

17. The apparatus of claim 10, wherein the processor is configured to control a graphical property of the game process panel user interface area based on an input of the game player with respect to the game process panel user interface area.

18. The apparatus of claim 10, wherein the display is configured to display bonus card information on the display when a preset reference is satisfied for the game process.

19. An application for providing a user interface for a game, the application being stored in a memory and executed by a processor,
wherein the application is executed to:
define a game process panel user interface area for displaying visual information about a game process on a portion of a display;
define a card panel user interface area for displaying a card information matrix that is configured based on card information included in an account of a game player, on another portion of the display;
display, based on an input of the card information in the card information matrix, a game character corresponding to the card information on the game process panel user interface area; and
display the card information on an area defined around the game character.

20. The application of claim 19, wherein the card information includes attribute information and number information of a card acquired in the game.

21. The application of claim 20, wherein the application is executed to display the number information and a color corresponding to the attribute information on the card panel user interface area.

22. The application of claim 20, wherein the attribute information indicates an attribute stronger or weaker than one of a plurality of pieces of attribute information classified based on a predefined attribute relationship.

23. The application of claim 19, wherein the number information indicates a skill of the game character.

24. The application of claim 19, wherein the application is executed to display at least one counterpart character fighting with the game character on the game process panel user interface area and display attribute information and number information of the counterpart character.

25. The application of claim 24, wherein the application is executed to display detailed information of the counterpart character on the game process panel user interface area based on an input of the game player with respect to the counterpart character.

26. The application of claim 19, wherein the application is executed to control a graphical property of the game process panel user interface area based on an input of the game player with respect to the game process panel user interface area.

27. The application of claim 19, wherein the application is executed to display bonus card information on the display when a preset reference is satisfied for the game process.
